# FASCICULE DE BREVET EUROPEEN

(11) **EP 4 511 242 B1**
(45) Date de publication et mention de la délivrance du brevet: **04.02.2026**
(21) Numéro de dépôt: 23724284.7
(22) Date de dépôt: 04.05.2023
(51) Int. Cl.: B60C 23/00

(54) **PROCEDE DE GONFLAGE POUR VEHICULE EQUIPE D'UN SYSTEME CENTRALISE DE GONFLAGE DES PNEUMATIQUES**
AUFPUMPVERFAHREN FÜR EIN FAHRZEUG MIT EINEM ZENTRALISIERTEN REIFENAUFPUMPSYSTEM
INFLATION METHOD FOR A VEHICLE PROVIDED WITH A CENTRALISED TYRE INFLATION SYSTEM

(30) Priorité: 07.06.2022 FR 2205459
(43) Date de publication de la demande: 26.02.2025
(73) Titulaire: Teleflow SAS, 42300 Mably (FR)
(72) Inventeur: ONILLON, Vincent, 42300 MABLY (FR)
(74) Mandataire: Ipsilon
(86) Numéro de dépôt international: PCT/EP2023/061771
(87) Numéro de publication internationale: WO 2023/237260

(56) Documents cités:
- US-A1- 2013 293 371
- US-A1- 2013 325 261
- US-A1- 2017 080 761

## Description

### Domaine technique

L'invention se rapporte au domaine technique des systèmes centralisés de gonflage des pneumatiques d'un véhicule, connus selon l'acronyme « CTIS » de l'anglicisme « Central Tire Inflation System ».

### Art antérieur

Il est connu de l'art antérieur des CTIS permettant d'ajuster la pression des pneumatiques des roues d'un véhicule, lorsque celle-ci doit être adaptée aux conditions de roulage.

Par exemple, un véhicule roulant sur un terrain meuble doit avoir une pression de pneumatiques faible pour maximiser l'adhérence et permettre l'avance du véhicule.

Une fois le terrain meuble franchi, il convient d'augmenter la pression des pneumatiques afin que le véhicule puisse circuler à une vitesse plus élevée, par exemple lorsque le véhicule rejoint une route.

Les CTIS comprennent généralement des joints tournants permettant de relier chaque pneumatique du véhicule à une source d'air comprimé ainsi qu'à un échappement. Il est donc possible d'ajuster la pression des pneumatiques, à la hausse ou à la baisse, sans avoir à manipuler des éléments pneumatiques individuels. En particulier, l'ajustement de la pression peut être faite alors que véhicule est en train de rouler.

Dans ce cas, les joints tournants sont soumis à une usure, qui peut être amplifiée par une chauffe se produisant au niveau desdits joints. Cette chauffe est fonction :
- de la vitesse de roulage du véhicule, qui a un impact sur le frottement entre la partie tournante et la partie fixe du joint ;
- de la pression de gonflage (ou de dégonflage) de l'air circulant dans le circuit fluidique entre le CTIS et la roue ;
- d'une durée d'utilisation (la durée totale du gonflage ou dégonflage).

Des améliorations ont été proposées afin de modifier le matériau de ces joints tournants, de concevoir des géométries de joints moins sensibles à ces échauffements, ou encore de prévoir un système de refroidissement du joint tournant. Néanmoins, ces solutions sont plus onéreuses que les joints standards et sont parfois complexes.

Il est connu le document US2017/080761 qui prévoit un ajustement strictement en deux étapes prédéfinies, et le document US2013/325261 dans lequel un seul groupe de pneumatiques est gonflé en deux paliers, simultanément au gonflage d'un deuxième groupe en un seul palier.

### Exposé de l'invention

L'un des buts de l'invention est de pallier les inconvénients de l'art antérieur, en proposant une méthode d'utilisation d'un CTIS préservant la durée de vie des joints tournants.

À cet effet, il a été mis au point un procédé d'ajustement de la pression des pneumatiques d'un véhicule par l'intermédiaire d'un système centralisé de gonflage des pneumatiques « CTIS » ;
- le véhicule comprenant au moins un premier groupe et un deuxième groupe de pneumatiques, chaque groupe comprenant au moins un pneumatique ;
- chaque groupe présentant une pression initiale, et une pression cible prédéterminée correspondant à chaque groupe ;
   le procédé consistant à effectuer une séquence d'ajustement de la pression de chaque groupe depuis la pression initiale vers la pression cible, la séquence comprenant au moins un palier pour chaque groupe, chaque palier étant défini par un volume d'air à ajouter dans les pneumatiques du groupe ;
- la séquence consistant à ajuster la pression des groupes, palier par palier, en passant à un autre groupe lorsqu'un palier est effectué, jusqu'à ce que chaque groupe ait atteint sa pression cible.

En pratique, cela consiste à :
- Ajuster la pression du premier groupe suivant le premier palier de la séquence du premier groupe ;
- Lorsque le palier du groupe est réalisé, ajuster la pression du deuxième groupe suivant le palier de la séquence du deuxième groupe, et ainsi de suite pour atteindre la pression cible.

De cette manière un seul groupe à la fois est ajusté, ce qui laisse un temps de repos aux joints tournants de l'autre ou des autres groupes, durant lequel ils ne sont pas sollicités et ils peuvent refroidir, même s'il n'y a qu'un seul palier par groupe. Le procédé permet donc d'éviter un échauffement excessif des joints tournants, et limite le temps de rotation sous pression et donc l'usure desdits joints tournants.

Néanmoins, la durée complète du procédé n'est pas augmentée de manière significative, car la quantité totale d'air à ajouter (ou à enlever) est la même qu'avec les solutions de l'art antérieur, et la durée de la séquence n'est limitée que par la capacité de débit d'air du CTIS.

S'il y a plusieurs paliers par groupe, alors le procédé est divisé en un nombre d'étapes encore plus important, ce qui limite d'autant plus l'échauffement des joints. En pratique, lorsque le premier palier de chaque groupe est réalisé, on réalise le palier suivant de chaque groupe, et ainsi de suite pour atteindre la pression cible.

Augmenter le nombre de paliers par séquence permet de limiter encore plus l'échauffement des joints. De plus, la variation de pression des pneumatiques du véhicule est plus homogène car les groupes sont gonflés petit à petit, et les uns après les autres, de sorte que la tenue de route du véhicule est améliorée.

Par « groupe », on entend des sous-ensembles des pneumatiques du véhicule qui peuvent comprendre un seul pneumatique, ou plusieurs pneumatiques devant être gonflés à la même pression (par exemple les pneumatiques des deux roues d'un essieu, ou encore un groupe d'essieux). Il est entendu qu'il peut y avoir plus de deux groupes.

Par exemple, les groupes sont définis à l'installation du CTIS, tel que lors du montage du réseau pneumatique : on relie entre eux les pneumatiques d'un même groupe. Chaque pneumatique peut également être relié individuellement au CTIS, et les groupes sont définis par programmation : on pilote ensemble les électrovannes reliant les pneumatiques d'un groupe au CTIS. Ces deux modes peuvent être combinés.

Les groupes peuvent également être modifiés ultérieurement, soit par modification du réseau pneumatique, soit par modification de la programmation.

Par « pression initiale », on entend la pression qui règne au sein du groupe avant la mise en œuvre du procédé, et par « pression cible » la pression à obtenir à la fin du procédé. Il est entendu que les pressions initiales et les pressions cibles peuvent être différentes d'un groupe à un autre.

La pression initiale peut être obtenue par mesure de la pression, ou encore par lecture d'une valeur enregistrée dans une mémoire du CTIS. La pression finale peut être saisie manuellement, avantageusement être sélectionnée parmi une liste, et de préférence par la sélection de la condition de roulage du véhicule.

Le nombre de paliers peut être différent d'un groupe à un autre, et peut éventuellement être fixé au préalable.

Selon une forme de réalisation particulière, une pression de fin de palier est mesurée à la fin de chaque palier, une fois que le palier est effectué, puis est comparée avec une pression de palier cible prédéfinie.

Cette étape de contrôle de l'atteinte d'une pression cible à la fin de chaque palier de gonflage, pour chaque groupe, permet de confirmer que le volume d'air apporté est bien au niveau programmé. La détection d'un écart peut être prise en compte par l'algorithme exécuté par le CTIS.

Afin de diminuer le nombre de capteurs de pression équipant le véhicule, la mesure de la pression de fin de palier est effectuée par l'intermédiaire d'un capteur de pression du CTIS en mesurant la pression d'un volume fermé comprenant un volume du groupe et d'une partie d'un volume interne du CTIS reliant le capteur de pression audit groupe.

Pour ne pas obtenir, en cours de procédé, des groupes dont les pressions ne correspondent pas à la séquence préétablie, une étape d'ajustement additionnelle du groupe est effectuée si la comparaison de la pression de fin de palier avec la pression de palier cible prédéfinie est supérieure à un seuil. Les dérives sont corrigées au fur et à mesure.

Dans un premier mode de réalisation, la pression cible de chaque groupe est enregistrée dans une mémoire du CTIS en vue d'une réutilisation ultérieure en tant que pression initiale de chaque groupe. Cela permet de raccourcir la durée du procédé en économisant une étape de mesure physique de la pression initiale.

Dans un second mode de réalisation, une mesure de la pression initiale de chaque groupe est effectuée par l'intermédiaire d'un capteur de pression du CTIS en mesurant la pression d'un volume fermé comprenant un volume du groupe et d'une partie d'un volume interne du CTIS reliant le capteur de pression audit groupe. Le procédé selon ce second mode est plus long que selon le premier mode, mais il est plus précis car il permet de détecter d'éventuelles variations de pression qui auraient pu survenir.

Dans un mode de réalisation préféré, un nombre de paliers d'un groupe est déterminé à partir d'une plus grande différence de pression entre la pression cible et la pression initiale du groupe.

Une première méthode de calcul consiste à diviser la différence de pression par une variation de pression maximale par palier.

Cette variation de pression maximale par palier est directement corrélée à la quantité d'air maximale à ajouter par palier, donc à la durée de mise en œuvre du joint tournant lors de chaque palier. Imposer une variation de pression maximale par palier équivaut donc à imposer un seuil maximum d'utilisation du joint par palier, afin de définir un seuil d'échauffement de joint par palier, c'est-à-dire une limite d'échauffement maximale par palier.

Une seconde méthode de calcul consiste à convertir la différence de pression en une durée d'ajustement, en utilisant le débit du CTIS, et à diviser cette durée d'ajustement par une durée maximale de palier.

De manière similaire, imposer une durée maximale de palier équivaut à imposer un seuil maximum d'utilisation du joint par palier, afin de définir un seuil d'échauffement de joint par palier.

De cette manière, on garantit que les joints ne seront pas sur-sollicités, quel que soit l'écart de pression de chacun des groupes. Il est également possible de calculer un nombre de paliers qui soit minimal, par exemple afin de limiter le nombre de mesures de la pression de fin de palier lorsque les étapes d'ajustement additionnelles sont mises en œuvre.

Avantageusement, la séquence de chaque groupe comprend un nombre de paliers identique. Ainsi, l'ajustement des pressions est progressif sur l'ensemble des groupes, ce qui assure une stabilité du véhicule qui est en déplacement. Cette méthode facilite également la programmation de l'automate du CTIS.

Dans un mode de réalisation préféré, le nombre de paliers est identique pour chaque groupe et est égal au plus grand nombre de paliers déterminé sur l'ensemble des groupes à partir d'une différence de pression entre la pression cible et la pression initiale du groupe. Cela permet de combiner les avantages précités.

Pour garantir un temps de repos maximal à chaque joint, les groupes sont ajustés en pression dans un ordre lors d'un palier, et les groupes sont ajustés en pression dans le même ordre lors des paliers suivants.

Pour garantir l'équilibre et la tenue de route du véhicule, chaque groupe comprend les pneumatiques montés d'un même essieu du véhicule, et éventuellement de plusieurs essieux.

L'invention concerne également un système centralisé de gonflage des pneumatiques « CTIS » pour véhicule, comprenant un automate programmé pour mettre en œuvre un procédé selon les caractéristiques précitées.

### Brève description des dessins

[Fig.1] est un diagramme illustrant un mode de réalisation du procédé selon l'invention.
[Fig.2] est un schéma illustrant un véhicule équipé d'un CTIS mettant en œuvre le procédé selon l'invention.

### Description détaillée de l'invention

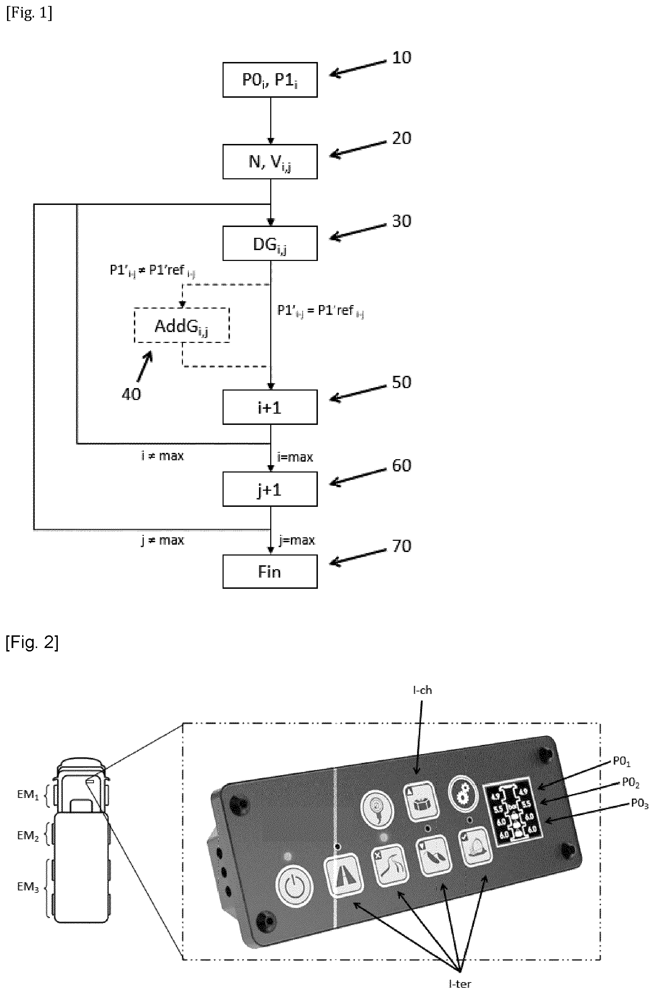

En référence aux figures 1 et 2, l'invention concerne un procédé de mise en œuvre d'un système centralisé de gonflage des pneumatiques « CTIS » pour véhicule, dans lequel les ajustements des pressions des pneumatiques sont effectués par groupes (EM i) de pneumatiques, afin de ne solliciter que de manière limitée les joints tournants desdits groupes (EM i).

Un véhicule comprend par exemple quatre essieux, dont les conditions de charge et d'utilisation ont mené à définir :
- un premier groupe (EM 1) comprenant les pneumatiques des roues du premier essieu ;
- un deuxième groupe (EM 2) comprenant les pneumatiques des roues du deuxième essieu ; et
- un troisième groupe (EM 3) comprenant les pneumatiques des roues du troisième essieu et du quatrième essieu ;
les pneumatiques de chaque groupe (EM i) devant être gonflés à la même pression.

Les conditions de charge et d'utilisation, notamment selon le terrain sur lequel évolue le véhicule, permettent de définir pour chacun des groupes (EM i) des pressions d'utilisation.

Des valeurs données à titre d'illustration, pour la bonne compréhension de la présente invention, peuvent être :
- le premier groupe (EM 1) doit être gonflé à 1,5 bar sur terrain meuble, et à 5 bars sur route ;
- le deuxième groupe (EM 2) doit être gonflé à 1,5 bar sur terrain meuble, et à 5,5 bars sur route ;
- le troisième groupe (EM 3) doit être gonflé à 2,5 bars sur terrain meuble, et à 6 bars sur route.

On se place dans le cas où le véhicule évoluait sur terrain meuble, avec des pressions de pneumatiques faibles, et aborde désormais une route. Les pneumatiques doivent donc être gonflés afin de limiter la consommation du véhicule, et permettre sa circulation à vitesse élevée sans risque de détérioration des pneumatiques.

Dans la suite de la description, on illustre donc le cas où il faut gonfler les pneumatiques, mais il est entendu que le procédé selon l'invention permet d'adapter la pression des pneumatiques, c'est-à-dire à la hausse comme à la baisse.

Dans le mode de réalisation préféré, le CTIS comprend un capteur de pression, et l'automate du CTIS est programmé pour mesurer lors d'une étape initiale (10), la pression d'un volume fermé comprenant :
- un volume du groupe (EM i), c'est-à-dire le volume des pneumatiques de ce groupe (EM i) ; et
- une partie d'un volume interne du CTIS reliant le capteur de pression audit groupe (EM i), c'est-à-dire la partie des réseaux pneumatiques reliant le capteur de pression à chacun des pneumatiques du groupe (EM i).

Il s'agit donc d'une mesure de la pression moyenne du groupe (EM i), à noter que la prise de mesure en tant que telle relie entre eux les différents pneumatiques du groupe (EM i), et équilibre donc de potentielles différences de pression d'un pneumatique à l'autre.

Ce capteur de pression permet d'obtenir la pression initiale (P0 i) de chaque groupe (EM i) de manière sûre et fiable. L'utilisation du capteur de pression du CTIS évite de disposer d'un capteur spécifique au niveau de chaque groupe (EM i).

Cette prise de mesure initiale permet notamment de détecter une crevaison, si la pression initiale (P0 i) est en deçà de la pression d'utilisation qui était prévue.

Toujours au sein de l'étape initiale (10), l'utilisateur saisit ensuite, au moyen d'une interface homme-machine (IHM) du CTIS, la pression cible (P1 i) désirée.
Cette saisie peut se faire :
- en appuyant sur un des boutons de terrain (I-ter) de l'IHM, permettant d'indiquer à l'automate sur quel terrain le véhicule va évoluer, et
- en appuyant sur le bouton de charge (I-ch) de l'IHM, permettant d'indiquer à l'automate si le véhicule circule à vide ou bien chargé.

L'automate, sur la base du terrain sélectionné et de la condition de charge du véhicule, sélectionne la pression cible (P1 i) de chaque groupe (EM i) au sein d'une base de données pré-enregistrée de pressions cibles.

Pour que la circulation du véhicule soit sécurisée, malgré le gonflage des pneumatiques qui s'effectue alors que véhicule roule, les groupes sont gonflés successivement et par paliers (DG i-j). Ainsi, il n'y a pas de groupe (EM i) qui présente déjà la pression recommandée de la circulation sur route alors que certains groupes (EM i) présentent encore la pression recommandée de la circulation sur terrain meuble.

Le nombre de paliers (DG i-j) peut être préprogrammé, ou encore être paramétrable. Le nombre de paliers (DG i-j) pourrait être différent d'un groupe (EM i) à l'autre, mais par simplicité de programmation dans l'exemple présenté le nombre de paliers est identique pour chaque groupe (EM i). Au surplus, dans le cas où les groupes (EM i) sont gonflés dans le même ordre à chaque palier (DG i-j), cela garantit un temps de repos optimal des joints pour chaque groupe (EM i).

Un nombre de paliers arbitraire permet d'obtenir un procédé simple, mais un perfectionnement peut être apporté.

Si un groupe (EM i) doit passer d'une pression initiale (P0 i) faible à une pression cible (P1 i) élevée, alors les joints tournants de ce groupe vont être très sollicités. Si le nombre de paliers (DG i-j) est insuffisant, les joints peuvent trop chauffer et se détériorer.

L'automate effectue donc la différence, pour chaque groupe (EM i), entre la pression cible (P1 i) et la pression initiale (P0 i). La plus grande différence de pression (DPmax) indique quelle sera la plus grande sollicitation du joint parmi les différents groupes (EM i), que cette sollicitation soit mesurée en durée ou en volume d'air. Le calcul de la sollicitation de chaque groupe (EM i) prend bien entendu en compte le volume interne du groupe (EM i), c'est-à-dire le volume de chaque pneumatique présent dans le groupe (EM i), et éventuellement une partie d'un volume interne du CTIS reliant le capteur de pression audit groupe.

Cette plus grande sollicitation du joint est divisée par un seuil d'utilisation maximal par palier (DG i-j), ce qui garantit que lors de chaque palier (DG i-j), le joint n'est pas sollicité au-delà du seuil prédéfini.

En pratique, deux méthodes de calcul sont envisagées :
- soit on divise la plus grande différence de pression (DPmax) par une variation de pression maximale par palier (DPmax-GP) ;
- soit on convertit la plus grande différence de pression (DPmax) en une durée d'ajustement maximale (DTmax), et on divise cette durée (DTmax) par une durée maximale de palier (DTmax-GP).

La variation de pression maximale par palier (DPmax-GP) et la durée maximale de palier (DTmax-GP) sont deux expressions différentes d'un seuil maximal de sollicitation du joint par palier (DG i-j).

Ces deux méthodes sont basées sur le même raisonnement et peuvent être choisies à la convenance du programmeur de l'automate.

La division prévue dans chacune des méthodes ci-avant fournit un nombre de paliers (DG i-j) minimal. Il est évident que ce nombre peut être arrondi à l'entier supérieur pour garantir que chaque palier (DG i-j) ne sur-sollicitera pas les joints.

L'automate définit ensuite une séquence de gonflage pour chacun des groupes (EM i), en calculant le volume d'air (V i,j) à ajouter au sein de chaque groupe (EM i), en fonction du nombre de pneumatiques du groupe (EM i), de leurs volumes et de la variation de pression à apporter au groupe (EM i) lors de chaque palier (DG i-j).

De manière connue en soi, sur la base de la pression d'alimentation du compresseur du CTIS, du débit d'air atteignable en fonction de la section des réseaux pneumatiques du CTIS, et du volume interne de chaque groupe (EM i), le volume d'air (V i,j) peut être calculé :
- en fonction d'une durée (DTG i-j) de chaque palier de gonflage (DG i-j), ou
- en fonction d'une variation de pression (DPG i-j) de chaque palier de gonflage (DG i-j).

La détermination du nombre de paliers (N) et des volumes d'air (V i,j) se déroule dans une étape de définition des séquences (20).

En référence à l'étape (30) du synoptique, le gonflage des groupes (EM i) est ensuite initié de la manière suivante :
- le CTIS délivre le volume d'air (V1,1) prévu pour le premier palier (DG1-1) du premier groupe (EM 1) ; puis
- le CTIS délivre le volume d'air (V2,1) prévu pour le premier palier (DG2-1) du deuxième groupe (EM 2) ; puis
- le CTIS délivre le volume d'air (V3,1) prévu pour le premier palier (DG3-1) du troisième groupe (EM 3).

Le premier palier (DGi-1) est effectué pour chacun des groupes (EM i).

Le procédé enchaîne ensuite sur le second palier pour chacun des groupes, lors de l'étape (60) du synoptique :
- le CTIS délivre le volume d'air (V1,2) prévu pour le deuxième palier (DG1-2) du premier groupe (EM 1) ; puis
- le CTIS délivre le volume d'air (V2,2) prévu pour le deuxième palier (DG2-2) du deuxième groupe (EM 2) ; puis
- le CTIS délivre le volume d'air (V3,2) prévu pour le deuxième palier (DG3-2) du troisième groupe (EM 3).

Les paliers sont ainsi effectués les uns après les autres par l'itération de l'étape (60), jusqu'à ce que la séquence de chaque groupe (EM i) soit effectuée, et que chaque groupe (EM i) ait atteint sa pression cible (P1 i).

Avantageusement, à la fin de chaque palier (DG i-j), une pression de fin de palier (P1'i-j) est mesurée, et est comparée avec une pression de palier cible prédéfinie (P1'ref i-j). Dans l'hypothèse où des conditions imprévues, telles que la température ou le mauvais fonctionnement d'un élément pneumatique, ont pu avoir un impact sur le gonflage effectif du groupe (EM i), et qu'il ne présente pas la pression de fin de palier (P1'i-j) attendue, cet écart est constaté par l'automate.

L'automate peut ensuite déclencher une alerte à l'attention du conducteur du véhicule.

L'automate peut également déclencher un palier additionnel (AddG i,j) à l'étape (40) du synoptique, lors duquel le CTIS va ajuster la pression du groupe (EM i) jusqu'à ce qu'elle atteigne la pression de fin de palier (P1'ref i-j) attendue, notamment si l'écart constaté est supérieur à un seuil prédéfini. En pratique, l'automate calcule le volume d'air additionnel (Vadd i-j) à rajouter ou à enlever au groupe (EM i) afin d'atteindre la pression de fin de palier (P1'ref i-j).

De cette manière, les déséquilibres des pressions entre les différents groupes (EM i) sont évités, et le bon équilibre ainsi que la bonne tenue de route du véhicule sont garantis.

La mesure par l'intermédiaire du capteur de pression du CTIS peut être rapide, en étant effectuée directement à la fin du palier (DG i-j). Bien que ce soit la pression mesurée soit celle du volume comprenant un volume du groupe (EM i) et une partie d'un volume interne du CTIS reliant le capteur de pression audit groupe (EM i), l'indication est suffisante pour savoir si le palier (DG i-j) s'est bien déroulé.

Par ailleurs, le procédé et le système centralisé de gonflage des pneumatiques peuvent être conçus différemment des exemples donnés sans sortir du cadre de l'invention, qui est défini par les revendications.

Par exemple, l'étape d'ajustement additionnelle (AddG i,j) peut ne pas intervenir à la fin (30) de chaque palier (DG i,j), mais une fois que toutes les séquences sont effectuées, juste avant la fin (70) du procédé.

Au lieu d'utiliser les boutons de terrain (I-ter) et le bouton de charge (I-ch), la pression cible (P1 i) peut être saisie directement par l'utilisateur, au moyen d'une interface adéquate de l'IHM.

En outre, les caractéristiques techniques des différents modes de réalisation et variantes mentionnés ci-dessus peuvent être, en totalité ou pour certaines d'entre elles, combinées entre elles. Ainsi, le procédé et le système centralisé de gonflage des pneumatiques peuvent être adaptés en termes de coûts, de fonctionnalités et de performance.

## Revendications

1. Procédé d'ajustement de la pression de pneumatiques d'un véhicule, de préférence en roulage, par l'intermédiaire d'un système centralisé de gonflage des pneumatiques « CTIS » ;
- le véhicule comprenant au moins un premier groupe et un deuxième groupe de pneumatiques (EM i), chaque groupe (EM i) comprenant au moins un pneumatique ;
- chaque groupe (EM i) présentant une pression initiale (P0 i) ;
- une pression cible (P1 i) prédéterminée correspondant à chaque groupe (EM i) ;
le procédé consistant à effectuer une séquence d'ajustement de la pression de chaque groupe (EM i) depuis la pression initiale (P0 i) vers la pression cible (P1 i) ;
- la séquence comprenant au moins un palier (DG i-j) pour chaque groupe (EM i) ;
chaque palier (DG i-j) étant défini par un volume d'air (Vi-j) à ajouter dans les pneumatiques du groupe (EM i) ;
- la séquence consistant à ajuster la pression des groupes (EM i), palier par palier (DG i-j), en passant à un autre groupe (EM i) lorsqu'un palier (DG i-j) est effectué, jusqu'à ce que chaque groupe (EM i) ait atteint sa pression cible (P1 i)
***caractérisé en ce qu*'**un nombre de paliers d'un groupe (EM i) est déterminé à partir d'une différence de pression (DPi) entre la pression cible (P1-i) et la pression initiale (PO-i) du groupe (EM i) :
- soit en divisant la différence de pression (DPi) par une variation de pression maximale par palier (DPmax-GP) ;
- soit en convertissant la différence de pression (DPi) en une durée d'ajustement (DTi), et en divisant cette durée (DTi) par une durée maximale de palier (DTmax-GP).

2. Procédé selon la revendication 1, dans lequel une pression de fin de palier (P1'i-j) est mesurée à la fin de chaque palier (DG i-j), puis est comparée avec une pression de palier cible prédéfinie (P1'ref i-j).

3. Procédé selon la revendication 2, dans lequel la mesure de la pression de fin de palier (P1'i-j) est effectuée par l'intermédiaire d'un capteur de pression du CTIS en mesurant la pression d'un volume fermé comprenant un volume du groupe (EM i) et d'une partie d'un volume interne du CTIS reliant le capteur de pression audit groupe.

4. Procédé selon l'une des revendications 2 à 3, dans lequel une étape d'ajustement additionnelle (AddGi-j) du groupe (EM i) est effectuée si la comparaison de la pression de fin de palier (P1'i-j) avec la pression de palier cible prédéfinie (P1'ref i-j) est supérieure à un seuil.

5. Procédé selon l'une des revendications 1 à 4, dans lequel la pression cible (P1 i) de chaque groupe (EM i) est enregistrée dans une mémoire du CTIS en vue d'une réutilisation ultérieure en tant que pression initiale (P0 i) de chaque groupe (EM i).

6. Procédé selon l'une des revendications 1 à 5, dans lequel une mesure de la pression initiale (P0 i) de chaque groupe (EM i) est effectuée par l'intermédiaire d'un capteur de pression du CTIS en mesurant la pression d'un volume fermé comprenant un volume du groupe (EM i) et d'une partie d'un volume interne du CTIS reliant le capteur de pression audit groupe.

7. Procédé selon l'une des revendications 1 à 6, dans lequel la séquence de chaque groupe (EM i) comprend un nombre de paliers (DG i-j) identique.

8. Procédé selon la revendication 7, dans lequel le nombre de paliers (DG i-j) correspond au plus grand nombre de paliers déterminé sur l'ensemble des groupes (EM i) à partir d'une différence de pression (DPi) entre la pression cible (P1-i) et la pression initiale (PO-i) du groupe (EM i).

9. Procédé selon l'une des revendications 1 à 8, dans lequel les groupes (EM i) sont ajustés en pression dans un ordre lors d'un palier, et les groupes (EM i) sont ajustés en pression dans le même ordre lors des paliers suivants.

10. Procédé selon l'une des revendications 1 à 9, dans lequel chaque groupe (EM i) comprend les pneumatiques montés sur un même essieu du véhicule.

11. Système centralisé de gonflage des pneumatiques « CTIS » pour véhicule, comprenant un automate programmé pour mettre en œuvre un procédé selon l'une des revendications précédentes.

## Patentansprüche

1. Verfahren zum Einstellen des Reifendrucks eines Fahrzeugs,
vorzugsweise während der Fahrt, mittels eines zentralen Reifenbefüllsystems (CTIS);
- das Fahrzeug umfassend mindestens eine erste Gruppe und eine zweite Gruppe von Reifen (EM i), wobei jede Gruppe (EM i) mindestens einen Reifen umfasst;
- jede Gruppe (EM i) weist einen Anfangsdruck (P0 i) auf;
- für jede Gruppe (EM i) ist ein vorgegebener Zieldruck (P1 i) vorgesehen;
das Verfahren bestehend darin, für jede Gruppe (EM i) eine Druckeinstellsequenz vom Anfangsdruck (P0 i) in Richtung auf den Zieldruck (P1 i) durchzuführen;
- wobei die Sequenz für jede Gruppe (EM i) mindestens einen Schritt (DG i-j) umfasst, wobei jeder Schritt (DG i-j) durch ein Luftvolumen (Vi-j) definiert ist, das den Reifen der Gruppe (EM i) zugeführt werden soll;
- wobei die Sequenz darin besteht, den Druck der Gruppen (EM i) schrittweise (DG i-j) einzustellen, wobei nach Durchführung eines Schritts (DG i-j) zu einer anderen Gruppe (EM i) gewechselt wird, bis jede Gruppe (EM i) ihren Zieldruck (P1 i) erreicht hat,
**dadurch gekennzeichnet, dass** die Anzahl der Schritte einer Gruppe (EM i) aus einer Druckdifferenz (DPi) zwischen dem Zieldruck (P1-i) und dem Anfangsdruck (PO-i) der Gruppe (EM i) bestimmt wird:
- entweder durch Teilen der Druckdifferenz (DPi) durch eine maximale Druckänderung pro Schritt (DPmax-GP);
- oder durch Umwandeln der Druckdifferenz (DPi) in eine Einstelldauer (DTi) und Teilen dieser Dauer (DTi) durch eine maximale Schrittdauer (DTmax-GP).

2. Verfahren nach Anspruch 1, wobei am Ende jedes Inkrements (DG i-j) ein End-des-Inkrements-Druck (P1'i-j) gemessen und anschließend mit einem vordefinierten Inkrement-Zieldruck (P1'ref i-j) verglichen wird.

3. Verfahren nach Anspruch 2, wobei der End-des-Inkrements-Druck (P1'i-j) mittels eines Drucksensors des CTIS gemessen wird, indem der Druck eines geschlossenen Volumens gemessen wird, das ein Volumen der Gruppe (EM i) und einen Teil eines internen Volumens des CTIS umfasst, welches den Drucksensor mit dieser Gruppe verbindet.

4. Verfahren nach einem der Ansprüche 2 bis 3, wobei ein Schritt einer zusätzlichen Anpassung (AddG i-j) der Gruppe (EM i) durchgeführt wird, wenn der Vergleich des End-des-Inkrements-Drucks (P1'i-j) mit dem vordefinierten Inkrement-Zieldruck (P1'ref i-j) einen Schwellenwert überschreitet.

5. Verfahren nach einem der Ansprüche 1 bis 4, wobei der Zieldruck (P1 i) jeder Gruppe (EM i) in einem Speicher des CTIS gespeichert wird, um anschließend als Anfangsdruck (P0 i) jeder Gruppe (EM i) wiederverwendet zu werden.

6. Verfahren nach einem der Ansprüche 1 bis 5, wobei der Anfangsdruck (P0 i) jeder Gruppe (EM i) mittels eines Drucksensors des CTIS gemessen wird, indem der Druck eines geschlossenen Volumens gemessen wird, das ein Volumen der Gruppe (EM i) und einen Teil eines internen Volumens des CTIS umfasst, welches den Drucksensor mit dieser Gruppe verbindet.

7. Verfahren nach einem der Ansprüche 1 bis 6, wobei die Sequenz jeder Gruppe (EM i) dieselbe Anzahl von Inkrementen (DG i-j) umfasst.

8. Verfahren nach Anspruch 7, wobei die Anzahl der Inkremente (DG i-j) der größten Anzahl von Inkrementen entspricht, die über alle Gruppen (EM i) hinweg aus einer Druckdifferenz (DPi) zwischen dem Zieldruck (P1-i) und dem Anfangsdruck (PO-i) der jeweiligen Gruppe (EM i) bestimmt wird.

9. Verfahren nach einem der Ansprüche 1 bis 8, wobei die Gruppen (EM i) während eines Inkrements in einer bestimmten Reihenfolge druckeingestellt werden und die Gruppen (EM i) während nachfolgender Inkremente in derselben Reihenfolge druckeingestellt werden.

10. Verfahren nach einem der Ansprüche 1 bis 9, wobei jede Gruppe (EM i) die auf derselben Achse des Fahrzeugs montierten Reifen umfasst.

11. Zentrales Reifenbefüllsystem, CTIS, für ein Fahrzeug, umfassend eine Steuereinheit, die programmiert ist, ein Verfahren nach einem der vorhergehenden Ansprüche auszuführen.

## Claims

1. A method for adjusting the tire pressure of a vehicle, preferably while driving, by means of a centralized tire inflation system (CTIS);
- the vehicle comprising at least a first group and a second group of tires (EM i), each group (EM i) comprising at least one tire;
- each group (EM i) having an initial pressure (P0 i);
- a predetermined target pressure (P1 i) corresponding to each group (EM i);
the method consisting in carrying out a pressure-adjustment sequence for each group (EM i) from the initial pressure (P0 i) toward the target pressure (P1 i);
- the sequence comprising at least one step (DG i-j) for each group (EM i), each step (DG i-j) being defined by a volume of air (Vi-j) to be added to the tires of the group (EM i);
- the sequence consisting in adjusting the pressure of the groups (EM i), step by step (DG i-j), switching to another group (EM i) when a step (DG i-j) has been carried out, until each group (EM i) has reached its target pressure (P1 i),
**characterized in that** a number of steps of a group (EM i) is determined from a pressure difference (DPi) between the target pressure (P1-i) and the initial pressure (PO-i) of the group (EM i):
- either by dividing the pressure difference (DPi) by a maximum pressure variation per step (DPmax-GP);
- or by converting the pressure difference (DPi) into an adjustment duration (DTi), and dividing this duration (DTi) by a maximum step duration (DTmax-GP).

2. Method according to claim 1, wherein an end-of-increment pressure (P1'i-j) is measured at the end of each increment (DG i-j) and then compared with a predefined increment target pressure (P1'ref i-j).

3. Method according to claim 2, wherein the end-of-increment pressure (P1'i-j) is measured by means of a pressure sensor of the CTIS by measuring the pressure of a closed volume comprising a volume of the group (EM i) and part of an internal volume of the CTIS connecting the pressure sensor to said group.

4. Method according to any of claims 2 to 3, wherein a step of additionally adjusting (AddGi-j) the group (EM i) is carried out if the comparison of the end-of-increment pressure (P1'i-j) with the predefined increment target pressure (P1'ref i-j) is greater than a threshold.

5. Method according to any of claims 1 to 4, wherein the target pressure (P1 i) of each group (EM i) is stored in a memory of the CTIS for subsequent reuse as the initial pressure (P0 i) of each group (EM i).

6. Method according to any of claims 1 to 5, wherein the initial pressure (P0 i) of each group (EM i) is measured by means of a pressure sensor of the CTIS by measuring the pressure of a closed volume comprising a volume of the group (EM i) and part of an internal volume of the CTIS connecting the pressure sensor to said group.

7. Method according to any of claims 1 to 6, wherein the sequence of each group (EM i) comprises the same number of increments (DG i-j).

8. Method according to claim 7, wherein the number of increments (DG i-j) corresponds to the largest number of increments determined across all the groups (EM i) from a pressure difference (DPi) between the target pressure (P1-i) and the initial pressure (PO-i) of the group (EM i).

9. Method according to any of claims 1 to 8, wherein the groups (EM i) are pressure-adjusted in a particular order during one increment and the groups (EM i) are pressure-adjusted in the same order during subsequent increments.

10. Method according to any of claims 1 to 9, wherein each group (EM i) comprises the tyres mounted on the same axle of the vehicle.

11. Central tyre inflation system, CTIS, for a vehicle, comprising a controller programmed to carry out a method according to any of the preceding claims.
